(19) Europäisches Patentamt
European Patent Office
Office européen des brevets

(11) **EP 0 796 226 B1**

(12) **EUROPEAN PATENT SPECIFICATION**

(45) Date of publication and mention
of the grant of the patent:
**31.03.1999 Bulletin 1999/13**

(51) Int. Cl.$^6$: **C01G 25/04**, C01G 25/02

(86) International application number:
**PCT/US95/15556**

(21) Application number: 95942514.1

(22) Date of filing: 30.11.1995

(87) International publication number:
**WO 96/16903** (06.06.1996 Gazette 1996/26)

(54) **TREATMENT OF A CHEMICAL**

BEHANDLUNG EINER CHEMISCHEN VERBINDUNG

TRAITEMENT D'UN PRODUIT CHIMIQUE

(84) Designated Contracting States:
**AT BE DE ES FR GB GR IE IT NL PT**

(30) Priority: **02.12.1994 ZA 9409602**

(43) Date of publication of application:
**24.09.1997 Bulletin 1997/39**

(73) Proprietor:
**ATOMIC ENERGY CORPORATION OF SOUTH
AFRICA LIMITED
Transvaal Province (ZA)**

(72) Inventor:
**NEL, Johannes, Theodorus
Kempton Park (ZA)**

(74) Representative:
**Marshall, Monica Anne
J.A. KEMP & CO.
14 South Square
Gray's Inn
London WC1R 5LX (GB)**

(56) References cited:
FR-A- 762 066          GB-A- 220 358

• ZEITSCHRIFT FUR ANORGANISCHE CHEMIE,
vol. 141, 1924 pages 284-288, XP 000567218 J.H.
DE BOER 'die trennung von zirconium und
hafnium duch kristallisation ihrer
ammoniumdoppelfluoride'
• ZEITSCHRIFT FUR ANORGANISCHE CHEMIE,
vol. 97, 1917 pages 73-112, VON OTTO RUFF
'uber die herstellung von zirkongegenstanden'

**Description**

THIS INVENTION relates to the treatment of a chemical. It relates in particular to a process for treating a zirconia-based material.

The Applicant is aware of an article entitled "Die Trennung von Zirconium und Hafnium duch Kristallisation ihrer Ammoniumdoppelfluoride" J.H. de Boer, Zeitschrift fur Anorganische Chemie, vol 141, 1924, pages 284-288, XP000567218. This article teaches subjecting a zirconia containing ore, alvite, to pretreatment, including $NaHSO_3$ smelting at high temperature, to obtain $Zr(OH)_4$, which is then subjected to aqueous HF dissolution.

The Applicant is also aware of an article entitled " Über die Herstellung von Zirkongegenstanden", von Otto Ruff, Zeitschrift fur Anorganische Chemie, vol 97, 1917, pages 73-112, which deals with the dissolution of Zirconia ($ZrO_2$ in aqueous HF.

The Applicant is also aware of GB-A-220358 which refers to both zirconia ($ZrO_2$) and alvite, and deals primarily with the separation of Zr and Hf.

Finally, the Applicant is aware of FR-A-762066 which teaches that by exposure to high temperature of 2400°C for an extensive period of some hours, zircon ($ZrSiO_4$) is converted to a zirconium oxide species and amorphous silica. The amorphous silica component is then removed by treatment with aqueous HF, ie aqueous HF is used to obtain desilication.

According to a first aspect of the invention, there is provided a process for treating a zirconia-based material which comprises reacting, in a reaction step, plasma dissociated zircon ('PDZ') with aqueous hydrogen fluoride ('HF'), to produce a soluble fluorozirconic acid compound dissolved in the aqueous HF.

Plasma dissociated zircon is obtained by destroying the crystal matrix of zircon ($ZrSiO_4$) by heating it to a high temperature in a plasma furnace or a plasma generator, under oxidizing, inert or reducing conditions. Zircon is a mineral which is abundantly available at relatively low cost, but is chemically inert. Thus, inert zircon mineral is rendered amenable to chemical processing in accordance with the invention, by means of such plasma dissociation. During plasma dissociation, zircon is dissociated into separate zirconia ($ZrO_2$) and silica ($SiO_2$) mineral phases, with the product commonly designated as dissociated zircon ('DZ'), plasma dissociated zircon ('PDZ'), or $ZrO_2 \cdot SiO_2$. Alternatively, the zircon can be processed in a transfer arc plasma furnace under reducing conditions effecting essentially the removal of the silica phase with essentially $ZrO_2$, popularly designated fused zirconia, remaining behind.

Zircon normally contains radioactive elements such as uranium (U) and thorium (Th) and their decay product elements, as well as other common impurities such as Fe, Ca, P, Al, Mg and Ti. These elements are released in the process of the invention, but the process provides an effective manner of dealing with these elements. In particular, the process results in the generation of only relatively small quantities of radioactive element containing wastes. Wherever reference is made in this specification to U and Th as radioactive elements, this is to be interpreted as referring instead or additionally also to their decay products.

In one embodiment of the invention, the PDZ may be non-desilicated, in which case the reaction proceeds in accordance with reaction (1):

$$ZrO_2 \cdot SiO_2 + 12HF \rightarrow H_2ZrF_6 + H_2SiF_6 + 4H_2O \qquad (1)$$

In another embodiment of the invention, the PDZ may be partially desilicated, in which case the reaction to produce the fluorozirconic acid is also in accordance with reaction (1).

In yet a further embodiment of the invention, the PDZ may be wholly desilicated, in which case the reaction to produce the fluorozirconic acid is in accordance with reaction (2):

$$ZrO_2 + 6HF \rightarrow H_2ZrF_6 + 2H_2O \qquad (2)$$

The desilication of the PDZ can be effected by known means, such as caustic soda leaching. Wholly or partially desilicated PDZ is also known as 'DPDZ'.

It is to be appreciated that whenever, in the reactions of the process of the invention, reference is made to hexafluorozirconic acid ($H_2ZrF_6$), this includes the compound $ZrF_4 \cdot 2HF \cdot xH_2O$ where x can range from 0 to 5.

According to a second aspect of the invention, there is provided a process for treating a zirconia based material, which comprises

reacting, in a reaction step, non-desilicated or partially desilicated plasma dissociated zircon ('PDZ') with aqueous hydrogen fluoride ('HF'), to produce a soluble fluoro zirconic acid compound dissolved in the aqueous HF, as well as a soluble fluoro silicic acid compound also dissolved in the aqueous HF;

separating a liquid fraction comprising residual aqueous HF, the soluble fluoro zirconic acid compound and the soluble fluoro silicic acid compound, from a residual solids fraction comprising poorly soluble or insoluble impurities selected from the group consisting in U, Th, Fe, Ti, Al and Ca;

heating the liquid fraction to evaporate the soluble fluoro silicic acid compound and aqueous HF so that the fluoro zirconic acid compound remains as a purified solid fraction.

The concentration of the HF in the aqueous HF or HF solution may be in the range of 5-70% HF by mass. The reaction may be effected at a moderately elevated temperature, which may be between 20°C and 120°C. Reactions (1) and (2) are exothermic. Thus, with a 40% HF solution and using PDZ as feed material, the reaction mixture reaches a temperature of $\pm 90°C$ within a few minutes, depending on the rate of feeding the PDZ into the HF solution. At lower HF concentrations, for example 30%, lower final temperatures are reached and in such cases it is preferable to heat the reaction mixture from an external source, for example to >80°C for complete reaction to take place.

The reaction period may be between 10 minutes and 4 hours, depending on the HF concentration, the degree of dissociation of the PDZ and the temperature of the reaction mixture.

Instead of, or in addition to hexafluorozirconic acid, ie $H_2ZrF_6$, tetrafluorozirconic acid, ie $H_2ZrOF_4$, and/or hydrates thereof, can be formed.

It will be appreciated that, in the reaction step, the zirconia and, when present, silica are dissolved in the HF solution, with the reaction products such as $H_2ZrF_6$ and $H_2SiF_6$ also being soluble in the aqueous hydrogen fluoride, so that only zircon that was not dissociated in the plasma, as well as poorly soluble or insoluble impurities or trace element such as U, Th, iron (Fe), titanium (Ti), aluminium (Al) and calcium (Ca) remain as more or less undissolved solids. The undissolved solids ('white fraction') can thus be removed as a solids fraction by suitable means, such as filtration, decantation or settling, optionally preceded, if necessary, by precipitation of the trace element(s) in question. The process accordingly provides an effective means of purifying PDZ or DPDZ to produce a relatively small quantity of residue containing undesirable contaminants such as U and Th, and their decay products. Any residual zircon which was not dissociated in the plasma can thus be separated out, so that the process is not dependent on the availability of PDZ with 100% degree of dissociation. The zircon which is removed during this step can naturally be recycled back to the plasma stage, after separation of non-zircon materials.

To enhance or optimize efficiency of reaction (2) and to reduce or minimize losses of Zr and F to the white fraction, the molar ratio of HF to zirconia plus silica, when present, is important, and will be controlled to obtain desired dissolution levels. Thus, the molar ratio of HF to zircoia plus silica, when present, may be in the range 1,1:0,9 to 0,9:1,1, more preferably in the range 1,05:0,95 to 0,95:1,05, and most preferably about 1:1.

If desired, the solids fraction can be subjected to further treatment to recover elements such as U and Th. For example, it can be subjected to dissolution, eg utilizing suitable acids, eg nitric acid, or bases, followed by filtration and ion exchange, with, as stated hereinbefore, only small quantities of waste products being produced. Instead, any undissociated zircon can be separated from other insoluble compounds by means of physical separation, such as flotation, again resulting in substantially insignificant volumes of waste products.

The process may include heating the residual solution containing the $H_2ZrF_6$, $H_2SiF_6$, $H_2O$ and excess HF to recover $H_2ZrF_6$. Thus, the solution may, in an evaporation step, be heated to a temperature between 20°C and 120°C at substantially atmospheric pressure, with all $H_2SiF_6$, $H_2O$ and excess HF being evaporated. These volatiles can then be condensed in a suitable condenser for subsequent recovery of HF and Si species, such as $SiO_2$, in known fashion. The HF thus recovered can be recycled to the reaction step.

Thus, in the evaporation step, reaction (3) takes place:

$$H_2ZrF_6(aq) + H_2SiF_6(aq) \rightarrow H_2ZrF_6(s) + H_2SiF_6(g) \tag{3}$$

$H_2ZrF_6$ (or $H_2ZrOF_4$) crystals are obtained from this evaporation step, and the process thus enables substantially complete separation of all Zr and Si species.

The $H_2ZrF_6$ crystals can then be further purified, in a purification step, in accordance with reaction (4):

$$H_2ZrF_6(impure) \rightarrow H_2ZrF_6(pure) \tag{4}$$

The purification step may comprise recrystallization or ion exchange.

Instead, the $H_2ZrF_6$ solution can be only partially evaporated to produce a saturated solution from which $H_2ZrF_6$ crystals can be crystallized with or without cooling of the solution. These crystals can be separated from the mother liquid by any suitable means, for example filtration. These crystals can be of high purity due to the fact that most of the impurities remain in solution and are not crystallized with the Zr species. After filtration of the $H_2ZrF_6$ crystals, the remaining solution can be completely evaporated to recover all the remaining Zr as $H_2ZrF_6$ (or $H_2ZrOF_4$). These crystals will of course contain any accumulated impurities of the mother liquid.

As a further alternative, the $H_2ZrF_6/H_2SiF_6$ solution can be fed directly to an ion exchange column to produce a much purer $H_2ZrF_6/H_2SiF_6$ solution, from which pure $H_2ZrF_6$ crystals can be crystallized.

In one embodiment of the invention, the resultant pure $H_2ZrF_6$ can then be converted to zirconia, for example by means of steam pyrolysis, in accordance with reaction (5):

$$H_2ZrF_6 + 2H_2O \rightarrow ZrO_2 + 6HF \tag{5}$$

The HF produced in reaction (5) can be recovered and reused in the reaction step.

In other embodiments of the invention, other zirconium chemicals can instead be produced from the pure $H_2ZrF_6$, such as, for example, $ZrF_4$, $ZrOF_2$, fluorozirconates such as $K_2ZrF_6$, zirconium sulphate, or zirconium carbonate.

The invention will now be described by way of non-limiting example with reference to the accompanying drawings.

In the drawings,

FIGURE 1 is a simplified flow diagram of a process according to the invention for treating dissociated zircon;
FIGURE 2 is an X-ray diffraction pattern of $ZrO_2$ produced in Example 1;
FIGURE 3 shows, in simplified flow diagram form, a small scale production set-up as used in Examples 5 to 7;
FIGURE 4 is an X-ray diffraction pattern of undissociated zircon that did not dissolve in HF, as described in Example 2; and
FIGURE 5 is an X-ray diffraction pattern of $ZrO_2$ produced in Example 11.

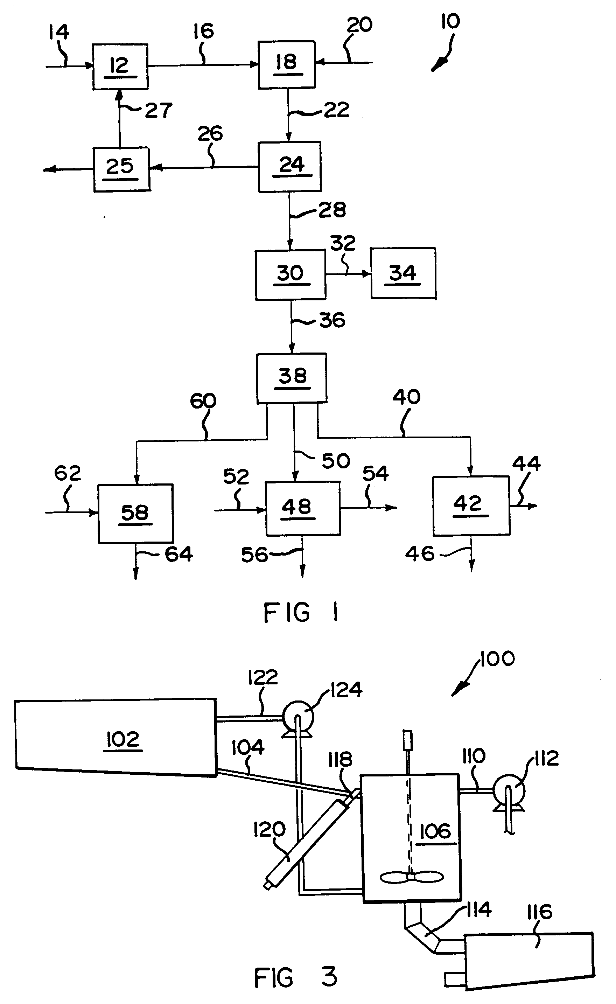

In Figure 1, reference numeral 10 generally indicates a process for treating dissociated zircon.

The process 10 includes a plasma dissociation stage 12, with a zircon feed line 14 leading into the stage 12. A PDZ flow line 16 leads from the stage 12 to a reaction step or stage 18, with a HF solution make-up line 20 leading into the stage 18. A transfer line 22 leads from the stage 18 to a liquid/solid separation step or stage 24. A zircon and white fraction withdrawal line 26 leads from the stage 24 to a zircon/white fraction separation stage 25, with a zircon return line 27 leading from the stage 25 back to the stage 12. A transfer line 28 leads from the stage 24 to an evaporation step or stage 30, with a volatile product withdrawal line 32 leading from the stage 30 to a treatment stage 34. A transfer line 36 leads from the stage 30 to a purification step or stage 38. A transfer line 40 leads from the stage 38 to a zirconia production step or stage 42, with a HF withdrawal line 44 as well as a $ZrO_2$ withdrawal line 46 leading from the stage 42. Instead, or additionally, a zirconium sulphate production step or stage 48 can be provided, with a flow line 50 then leading from the stage 38 to the stage 48. A $H_2SO_4$ feed line 52 will then also lead into the stage 48 with a HF withdrawal line 54 as well as a zirconium sulphate withdrawal line 56 leading from the stage 48. Instead, or additionally, a fluorozirconate production step or stage 58 can be provided, with a flow line 60 then leading from the stage 38 to the stage 58. A KOH feed line 62 then leads into the stage 58, with a fluorozirconate withdrawal line 64 leading from the stage 58.

In use, $ZrSiO_4$ is fed, by means of the flow line 14, into the plasma dissociation stage 12, together with recycled zircon entering the stage 12 along the flow line 26. In the stage 12, the zircon is dissociated, by means of plasma dissociation, into PDZ. The PDZ passes along the flow line 16 to the stage 18.

In the stage 18, the PDZ is dissolved in a HF solution having a concentration of between 5% and 70% HF, and a temperature of between 20°C and 120°C, and reacts to form $H_2ZrF_6$ and $H_2SiF_6$ in accordance with reaction (1):

$$ZrO_2 \cdot SiO_2 + 12HF \rightarrow H_2ZrF_6 + H_2SiF_6 + 4H_2O \tag{1}$$

The preferred HF concentration is 40% and the preferred temperature is 80°C, although the dissolution can also be effected at concentrations up to 100% HF.

The solution formed in the stage 18 and containing dissolved $H_2ZrF_6$, $H_2SiF_6$, $H_2O$ and excess HF, as well as any undissolved solids, passes to the liquid/solid separation stage 24 where a solids fraction comprising undissociated zircon as well as any undissolved or precipitated impurities such as U and Th is separated from a liquid fraction comprising excess HF solution, $H_2O$, dissolved $H_2ZrF_6$ and dissolved $H_2SiF_6$. The solids fraction is removed along the line 26, subjected to further treatment in the stage 25 to separate the white fraction from undissociated zircon, eg by means of dissolution in $H_2SO_4$, followed by filtration and ion exchange to remove therefrom the U and Th, before recycling the zircon to the stage 12 along the line 27. Thus, only relatively small volumes of U and Th containing waste are obtained from the process 10.

The liquid fraction passes along the line 28 to the stage 30 where a volatile fraction comprising $H_2SiF_6$, HF and $H_2O$ is withdrawn along the flow line 32, by distilling the solution at a temperature between 40°C and 120°C and at atmospheric pressure. The volatiles enter the stage 34 where they are condensed for recovery of HF and high grade Si species, with the HF being recycled (not shown) to the stage 18. Separation of the HF from the Si species can be effected by means of flame hydrolysis, steam plasma or the like.

Optionally, instead of the liquid fraction passing directly to the stage 30, it can first be fed into an ion exchange stage (not shown) for initial purification thereof, with the liquid fraction thereafter passing to the stage 30.

In the stage 30, substantially complete separation of Zr species from Si species is obtained. Thus, in a laboratory scale simulation of the process 10, it was found that the $H_2ZrF_6$ fraction from the stage 30 contained 46,1% by mass Zr and less than 0,5% by mass Si, while the volatile fraction from the stage 30, after condensation, contained 55,7g/ℓ $H_2SiF_6$, and less than 1 ppm Zr.

In the stage 30, when more than 20% of the liquid has evaporated, a highly saturated solution of $H_2ZrF_6$ is obtained. Depending on the amount of liquid that has evaporated, crystallization of the $H_2ZrF_6$ (or $H_2ZrOF_4$) takes place without cooling or upon cooling thereof to room temperature. This crystallization is in itself a further purification step with regard to impurities such as U, Th, Fe, Ti and Ca. The crystals can be removed from the residual solution by filtration, while the impurities remain largely in solution and can be removed subsequently by ion exchange (not shown).

Instead, in the stage 30, complete evaporation of the $H_2ZrF_6$ and $H_2SiF_6$ solution can be effected, with $H_2ZrF_6$ (or $H_2ZrOF_4$) crystals then being obtained. These crystals can be dried in an oven (not shown). If it is desired to minimize fluorine (F) losses during this drying step, the temperature should not exceed the decomposition temperature of $H_2ZrF_6$. Thus, the drying can be effected between 40°C and 90°C, preferably at <80°C. The evaporation can be effected by any convenient means such as distillation, spray-drying or the like.

The relatively impure $H_2ZrF_6$ from the stage 30 passes to the purification stage 38.

The impure $H_2ZrF_6$ crystals which pass from the stage 30 are highly soluble in water, and solubilities of up to 1g/mℓ of water are obtainable. Further purification of these crystals can thus easily be effected by dissolution and subsequent recrystallization, or ion exchange, in the stage 38, to produce $H_2ZrF_6$ having substantially reduced radioactivity.

For recrystallization, the $H_2ZrF_6$ crystals are dissolved in the minimum volume of warm water, to produce a highly saturated solution. On cooling to room temperature, recrystallization takes place. The resultant crystals can be recovered by means of filtration, and dried.

Instead, for ion exchange, the $H_2ZrF_6$ crystals can be dissolved in water in a concentration range of 0,1M to 2,0M. This solution can then be passed through a column containing a suitable ion exchange resin for removing impurities such as U and Th. The solution is again evaporated to produce $H_2ZrF_6$ crystals in which the concentration of impurities, especially U and Th, is significantly reduced. The U and Th contaminants can subsequently be eluted from the ion exchange resin in easily manageable confined volumes.

EXAMPLE 1

In a laboratory scale simulation of the various steps of the process 10, the following results were obtained:

TABLE 1

| Purifying action effected in the various steps of the process of the present invention. | | | | | | | |
|---|---|---|---|---|---|---|---|
| SAMPLE | Zr (%) | Si (%) | Ca (%) | Ti (%) | Fe (%) | U (ppm) | Th (ppm) |
| PDZ entering stage 18 | 47,9 | 15,4 | 0,085 | 0,059 | 0,048 | 350 | 140 |
| Filtered out undissolved impurities leaving stage 24 along the flow line 26 | 44,9 | 0,8 | 2,688 | 0,018 | 0,050 | 1169 | 1891 |
| $H_2ZrF_6$/$H_2ZrOF_4$ leaving stage 30 along flow line 36 | 45,8 | <0,2 | <0,01 | 0,035 | 0,04 | 167 | 48 |
| Recrystallize d $H_2ZrF_6$ ($H_2ZrOF_4$) leaving stage 38 along the flow lines 40, 50, 60 | 45,2 | <0,02 | <0,01 | <0,01 | <0,01 | 42 | <20 |
| Ion exchange -Before, ie entering stage 38 | | | | 0,027 | 0,03 | 145 | 71 |
| After, ie leaving stage 38 | | | | <0,01 | <0,01 | 83 | <20 |

The purified $H_2ZrF_6$ crystals from the stage 38 can be converted, in the stage 42, to zirconia ($ZrO_2$) by means of steam pyrolysis, at temperatures between 450°C and 850°C, for reaction periods ranging from 30 minutes to 3 hours in a suitable oven, such as a rotary kiln, in accordance with reactions (6) and (7):

$$H_2ZrF_6 + 2H_2O \text{ (steam)} \rightarrow ZrO_2 + 6HF \qquad (6)$$

$$H_2ZrOF_4 + H_2O \text{ (steam)} \rightarrow ZrO_2 + 4HF \qquad (7)$$

Further desilication is effected during the steam pyrolysis.

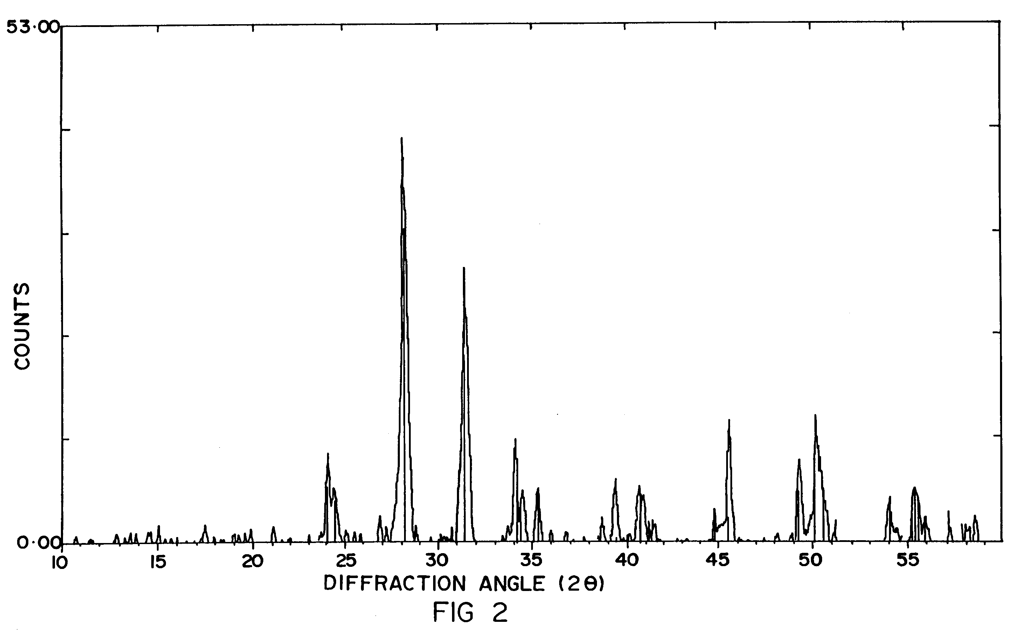

An X-ray diffraction pattern of zirconia produced in this manner in the laboratory scale simulation of the process 10 is given in Figure 2.

Efficient conversion of $H_2ZrF_6$ to $ZrO_2$ in the stage 42 is not primarily dependent on feeding the $H_2ZrF_6$ as dry crystals. Apart from steam pyrolysis conversion, final evaporation can also be effected in the rotary kiln. Thus, the crystallization effected in the stages 30, 38 can be avoided so that the $H_2ZrF_6/H_2SiF_6$ solution from the stage 24 can be fed directly into the stage 42, or after partial concentration thereof by evaporation.

The HF that is liberated in the stage 42 can be trapped in a suitable condenser or scrubber (not shown) and the thus recovered HF can be recycled to the stage 18.

Instead, or additionally, zirconium sulphate can be produced in the stage 48 by reacting the $H_2ZrF_6$ with $H_2SO_4$, with HF also being liberated for recycling.

Yet further, $K_2ZrF_6$ can be produced in the stage 58 by reaction of $H_2ZrF_6$ with any suitable potassium salt, for example KOH.

Still further, the $H_2ZrF_6$ can be converted thermally to $ZrF_4$ in a HF atmosphere (not shown) and the resultant $ZrF_4$ purified by means of sublimation/desublimation.

Further tests to simulate and test the process 10 were also conducted, on a larger scale than Example 1.

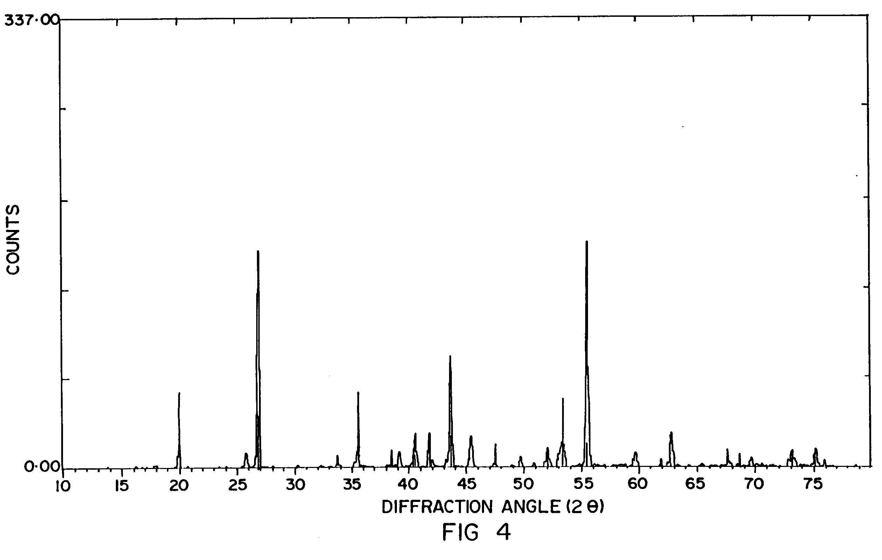

Examples 2 to 4 and 8 to 10 were done on laboratory apparatus, while Examples 5 to 7 were carried out on a small scale production setup, in accordance with Figure 3.

In Figure 3, reference numeral 100 generally indicates the small scale production setup. The setup 100 comprises a liquid storage tank 102, with a flow line 104 leading from the tank 102 to a stirred reactor 106. An HF solution flow line 110, fitted with a pump 112, leads into the reactor 106, while a solids withdrawal line 114 leads from the bottom of the reactor to a solids storage tank 116. The reactor 106 is fitted with heating and cooling loops (not shown) and a volatiles withdrawal line 118, fitted with a condenser 120, leads from the reactor 106. A liquid recycle line 122 leads from the reactor 106 back to the tank 102, and is fitted with a pump 124.

In each of Examples 5 to 7, the first step in the production of $H_2ZrF_6$ was to pump the required amount of 40% HF into the reactor along the flow line 110.

PDZ was then fed into the reactor, under agitation, using a solids feed hopper (not shown) situated on the reactor lid.

The solids in the reaction mixture were separated from the liquid product phase using known settling techniques, after which the product (liquid) phase was pumped, along line 122, to the liquid storage tank 102. The solids were flushed, along line 114, to the solids storage tank 116 and the reactor washed.

The product phase was then fed back into the reactor along line 104, where separation between $H_2ZrF_6$ and $H_2SiF_6$ was done by evaporation of the volatile $H_2SiF_6$, $H_2O$ and HF. The vapours were condensed and analysed. The residue after evaporation was a slurry of $H_2ZrF_6/H_2ZrOF_4$ crystals.

## EXAMPLE 2

500g of plasma dissociated zircon ('PDZ') (with a total dissociation of 90%) was added to 1,4ℓ of a 40% aqueous HF solution in a 5ℓ PTFE beaker. The reaction mixture was continuously stirred throughout the reaction period. The temperature of the reaction mixture rose from 24°C to 86°C within 2 minutes. After 4 hours, the reaction mixture was allowed to cool, and the undissolved solids were separated from the mother liquid by means of filtration and/or decantation/sedimentation.

The solids consisted of a fine white fraction and undissociated zircon. The mass of the zircon portion was 45,0g (9% of the original starting material). This corrresponds well with the 90% dissociation of the starting material. X-ray diffraction (XRD) analysis confirmed that this portion of the solids was mainly zircon - see Figure 4. The mass of the white fraction was 31,8g (6,4% of the original starting material). XRD analysis of the white fraction showed that it consisted of a mixture of $ZrO_2$, $ZrOF_2$, $ZrF_4$ and intermediate oxyfluorides.

The mother liquid was evaporated at a temperature >80°C. After all the liquid had evaporated, 348,5g of $H_2ZrF_6$ (or $H_2ZrOF_4$) crystals remained in the beaker.

The chemical analysis of the unreacted zircon, the white fraction and the final product are given in Table 2.

TABLE 2

| Sample | % Zr | % Si | % Hf | % F⁻ | ppm Al | ppm Ca | ppm Fe | ppm Ti | ppm U | ppm Th |
|---|---|---|---|---|---|---|---|---|---|---|
| Unreacted zircon | 50,3 | 15,2 | 1,2 | 0,1 | 586 | 307 | 620 | 831 | 351 | 149 |

TABLE 2 (continued)

| Sample | % Zr | % Si | % Hf | % F⁻ | ppm Al | ppm Ca | ppm Fe | ppm Ti | ppm U | ppm Th |
|---|---|---|---|---|---|---|---|---|---|---|
| White fraction | 58,6 | 3,4 | 1,4 | 13,4 | 2698 | 7640 | <100 | 1659 | 539 | 680 |
| Final Product | 58,3 | 0,03 | 1,5 | 37,2 | 568 | <100 | 246 | 563 | 238 | 69 |

## EXAMPLE 3

100mℓ of the mother liquid (obtained from a typical run as described in Example 2) was evaporated to 50mℓ, and the solution allowed to cool. The crystals which formed were filtered off and dried. The filtrate was further evaporated until only dried crystals remained. Chemical analysis, summarized in Table 3 below, showed the crystals that formed after the evaporation of the first 50mℓ of the mother liquid (sample A) were much purer than the crystals which formed with complete evaporation of the rest of the liquid (sample B).

TABLE 3

| Sample | Si ppm | Ti ppm | Al ppm | Fe ppm | Ca ppm | U ppm |
|---|---|---|---|---|---|---|
| A | <10 | <10 | 837 | 364 | <10 | 238 |
| B | <10 | 2047 | 14506 | 3781 | 84 | 406 |

It was also established that 24,77g (82%) crystals formed after evaporation of 50% of the mother liquid (sample A) and a further 5,37g (18%) crystals formed after complete evaporation of the filtrate (sample B).

## EXAMPLE 4

Using the procedures and parameters of Example 2, it was demonstrated that the amount and the chemical composition of the white fraction can be manipulated by the amount of HF available for reaction. For example, 0,43kg of plasma dissociated zircon, (with a total dissociation of 71%) was added to 910mℓ of 40% aqueous HF solution. The reaction mixture was stirred throughout the reaction period. After cooling, all the solids were separated from the mother liquid by means of filtration and/or decantation/sedimentation. The dissociated zircon and the white fraction were further separated. The mass of the undissociated zircon was 121,4g, which is 28,2% of the original starting material. This corresponds well with the starting material which was 71% dissociated. The mass of the white fraction was 154,8g, which is 36% of the starting material.

The reaction

$$ZrO_2 \cdot SiO_2 + xHF \rightarrow H_2ZrF_6 + H_2SiF_6 + 4H_2O \tag{8}$$

was studied further by varying the molar ratio of HF to ($ZrO_2+SiO_2$) in the PDZ. It was found that the molar ratio of HF to zirconia and silica determined the composition and amount of the white fraction, as can be seen from Table 4.

TABLE 4

| Moles HF(x) used in reaction (8), ie in dissolution of $ZrO2 \cdot SiO_2$ | Weight % of product ($H_2ZrF_6 + H_2SiF_6$) formed from PDZ (initial) | Weight % of white fraction formed from PDZ (initial) |
|---|---|---|
| 3 | 0 | 100 |
| 4 | 14,8 | 85,2 |
| 6 | 35,5 | 64,5 |
| 9,6 | 91,4 | 8,6 |
| 11,4 | 90,0 | 9,1 |
| 20,4 | 91,4 | 8,6 |

TABLE 4 (continued)

| Moles HF(x) used in reaction (8), ie in dissolution of ZrO2 • SiO$_2$ | Weight % of product (H$_2$ZrF$_6$ + H$_2$SiF$_6$) formed from PDZ (initial) | Weight % of white fraction formed from PDZ (initial) |
| --- | --- | --- |
| 48 | 100 | 0 |
| 12 moles of HF is needed theoretically to dissolve the ZrO$_2$ • SiO$_2$ fully. | | |

## EXAMPLE 5

40ℓ of a 40% HF mixture were pumped into the reactor 106. This gave a total of 18,56kg pure HF.

17kg of 79% PDZ having a mass of 13,43kg PDZ, was gradually fed to the reactor. A temperature of 88°C was reached due to the exothermic nature of the reaction. The mother liquor was analysed as follows:

| | |
| --- | --- |
| $H_2ZrF_6$ = | 27,39% (mass base) |
| $H_2SiF_6$ = | 18,37% |
| HF = | 0,46% |
| $H_2O$ = | 53,78% |

The white fraction produced in the reaction amounted to 322g, which represented 2,4% of the actual mass of PDZ fed to the system. The total mass of $H_2ZrF_{6(s)}$ produced was 13,96kg (actual) together with a mass of 9,71kg $H_2SiF_{6(\ell)}$ (calculated).

## EXAMPLE 6

Again 40ℓ of 40% HF were pumped into the reactor 106, giving a total HF content of 18,56kg HF.

18,4kg of 73% PDZ, giving a mass of 13,43kg PDZ, was fed to the reactor within 30 minutes. The temperature increased to >90°C within 5 minutes, and cooling water was used to stabilize the temperature at between 80°C and 90°C.

The mother liquor was analyzed as follows:

| | |
| --- | --- |
| $H_2ZrF_6$ = | 26,98% (mass base) |
| $H_2SiF_6$ = | 18,07% |
| HF = | 1,03% |
| $H_2O$ - | 53,92% |

The white fraction produced in the reaction amounted to 353g, representing a fraction of 2,63% of the pure PDZ fed to the reactor. 13,75kg $H_2ZrF_{6(s)}$ (actual) was produced in the run together with a mass of 9,56kg $H_2SiF_{6(\ell)}$ (calculated).

## EXAMPLE 7

In this example the setup or system 100 was run at full capacity.

45ℓ of 40% HF were pumped into the reactor 106, giving a nett mass of 20,34kg HF.

17,85kg 87% PDZ was fed to the reactor within 30 minutes, giving a nett mass of 15,53kg PDZ. Cooling water was used to stabilize the temperature of the reacting mixture at 85°C.

The mother liquor was analysed as follows:

| | |
| --- | --- |
| $H_2ZrF_6$ = | 26,74% (mass basis) |
| $H_2SiF_6$ = | 17,03% |
| HF = | 2,57% |
| $H_2O$ = | 53,66% |

A total mass of 407g white fraction was collected which represented 2,62% of the PDZ fed to the reactor. A total mass of 16,85kg $H_2ZrF_{6(s)}$ (actual) was produced in the run together with a mass of 11,72kg $H_2SiF_6$ (calculated).

In all the abovementioned examples, the crystals were formed by evaporating between 20% and 40% of the mother liquor. The crystals were extracted and the remaining liquor heated in containers to produce the rest of the

$H_2ZrF_6$ crystals.

During the evaporation of the volatiles, samples were taken for analyses, as set out in Table 5.

Table 5 shows the compositions of the different samples taken as mass percentages. The total amount of condensate collected was 37% of the liquor (volume) used in the run. As a result of the ever-present HF in the system, no blockages due to $SiO_{2(s)}$ precipitation were found in the condenser. No Zr specie could be found in the condensate.

Typical analytical results of the materials used and produced in the reaction, in relation to radioactive components, are summarized in Table 6.

TABLE 5

| Values obtained in respect of $H_2SiF_6$, HF and $H_2O$ in volatile fractions. | | | |
|---|---|---|---|
| Fraction | % $H_2SiF_6$ | % HF | % $H_2O$ |
| 1 | 1,85 | 2,84 | 95,31 |
| 2 | 3,57 | 4,37 | 92,06 |
| 3 | 4,81 | 4,61 | 90,58 |
| 4 | 6,95 | 4,65 | 88,40 |
| 5 | 10,67 | 4,23 | 85,10 |
| 6 | 15,28 | 4,22 | 80,50 |
| 7 | 24,73 | 2,75 | 72,52 |
| 8 | 32,38 | 1,53 | 66,09 |
| 9 | 36,02 | 2,32 | 61,66 |

TABLE 6

| SAMPLE | Alpha Radiation - $\alpha$ | Beta Radiation - $\beta$ | Uranium Concentration - [U] | Thorium Concentration - [Th] | Radiation from $^{226}$Ra | Radiation from $^{228}$Ra | Radiation from $^{224}$Ra |
|---|---|---|---|---|---|---|---|
| | Bq/g | Bq/g | $\mu$g/g | $\mu$g/g | Bq/g | | |
| PDZ raw material | 57 | 28 | 400 | 150 | 4,2 | 0,5 | 0,5 |
| $H_2ZrF_6$ | 14 | 7 | 166 | 61 | 0,4 | 0,04 | 0,18 |
| White fraction | 923 | 261 | 444 | 691 | 43 | 6,03 | 2,05 |

## EXAMPLE 8

2$\ell$ of a solution containing $H_2ZrF_6$ and $H_2SiF_6$, with a uranium concentration of 89,5 $\mu$g/m$\ell$ and 4,5% free hydrofluoric acid, was run through a 50,0g Purolite S940 column at a flow rate of 1,32cm/min. The column had an inner diameter of 38mm. Twenty fractions of 100m$\ell$ were collected and analysed for uranium by neutron activation analysis. The analysis results showed that the resin was able to remove 81% uranium at 200m$\ell$ solution with a resulting resin capacity of 0,32mg U/g resin. 90% breakthrough was reached at 2000m$\ell$ solution with a resulting capacity of 1,11mg U/g resin.

## EXAMPLE 9

2$\ell$ of a solution containing $H_2ZrF_6$ and $H_2SiF_6$, with a uranium concentration of 45,5$\mu$g/m$\ell$ and 7,7% free hydrofluoric acid, was run through a 50,0g Purolite S940 column at a flow rate of 1,32cm/min. The column had an inner diameter of 38mm. Twenty fractions of 100m$\ell$ were collected and analysed for uranium by neutron activation analysis. The analysis results showed that the resin was able to remove 71% uranium at 200m$\ell$ solution with a resulting resin capacity of 0,15mg U/g resin. Total breakthrough was reached at 1900m$\ell$ solution and the total capacity was 0,39mg U/g resin.

EXAMPLE 10

8,75g $H_2ZrF_6$ crystals were reacted with 402g of superheated steam over a period of 2 hours in a static oven, at a temperature of 650°C. The evolved HF was condensed in a suitable condenser. 5,25g of $ZrO_2$ was formed. XRD-analysis confirmed that the product was $ZrO_2$. The HF that was condensed, had a concentration of more than 40%. The purity of the $ZrO_2$ is summarized in Table 6.

TABLE 6

| % Zr | % Hf | % Si | % F$^-$ | ppm Ti | ppm Al | ppm Fe | ppm Ca | ppm U | ppm Th |
|---|---|---|---|---|---|---|---|---|---|
| 73,2 | 1,0 | 0,03 | 0,78 | <100 | 285 | 772 | 208 | 109 | 21 |

EXAMPLE 11

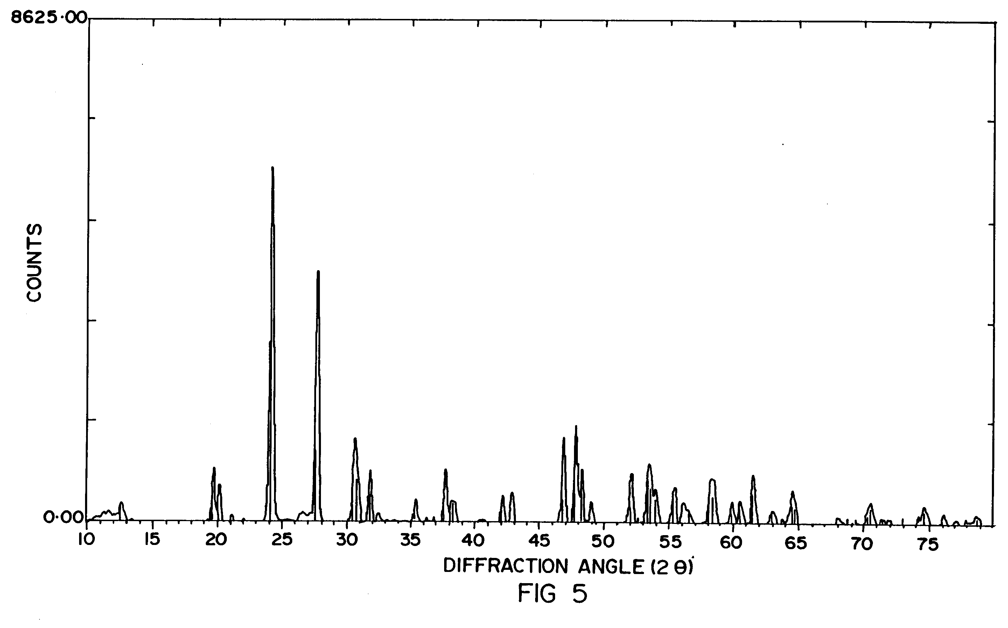

1,5kg $H_2ZrF_6$ crystals were reacted with 1kg of superheated steam in a dynamic "paddle oven" at a temperature of 730°C. The feed rate of the solids to the oven was 50g/min. The feed rate of the steam was 500g/h. The average residence time of the solids in the oven was 3½ hours. XRD analysis confirmed that the product was $ZrO_2$ - see Figure 5. About 600g of $ZrO_2$ was withdrawn from the product outlet, with the rest of the $ZrO_2$ still contained in the dead volumes in the inside of the oven. The purity of the final product is summarized in Table 7.

TABLE 7

| % Zr | % Hf | ppm Si | % F$^-$ | ppm Ti | ppm Al | ppm Fe | ppm Ca | ppm U | ppm Th |
|---|---|---|---|---|---|---|---|---|---|
| 69,1 | 1,1 | <10 | 0,30 | <10 | <10 | 901* | <10 | 425 | <10 |

* The high Fe content is due to corrosion contamination from a stainless steel oven component.

Thus, the process 10 is environmentally friendly in the sense that no unmanageable waste products are produced, and essentially all the HF is recovered for reuse, which enhances cost-effectiveness.

Further advantages of the process 10 include the following:

- zirconium products with low U and Th content can be obtained in cost-effective manner from baddeleyite and zircon;
- primary dissolution of the zirconia or DZ in the reaction stage 18 and secondary purification in the evaporation stage 30 is effected in the same medium, ie HF solution, leading to good efficacy and cost-effective processing;
- feed contaminants such as Si, Fe, Ti, Al, U and Th are removed substantially entirely in a cost-effective manner by selective dissolution, selective precipitation, recrystallization, ion exchange and combinations hereof, as described hereinbefore;
- any residual HF in any process or product stream can easily be rendered harmless by means of lime precipitation.

**Claims**

1. A process for treating a zirconia-based material which, comprises reacting, in a reaction step, plasma dissociated zircon ('PDZ') with aqueous hydrogen fluoride ('HF'), to produce a soluble fluoro zirconic acid compound dissolved in the aqueous HF.

2. A process according to claim 1, wherein the PDZ is nondesilicated or partially desilicated so that, in addition to the soluble fluoro zirconic acid compound, a soluble fluoro silicic acid compound, also dissolved in the aqueous HF, is produced.

3. A process according to claim 2, wherein the concentration of the HF in the aqueous HF is in the range of 5-70% HF by mass, with the reaction being effected at a temperature between 20°C. and 120°C., and the reaction period being between 10 minutes and 4 hours.

4. A process according to claim 2 or claim 3, wherein the quantity of HF, as aqueous HF, used is approximately stoichiometric, on a molar basis, with respect to the zirconia component plus the silica component of the PDZ.

5. A process according to any one of claims 2 to 4 inclusive, which includes separating a liquid fraction comprising residual aqueous HF, the soluble fluoro zirconic acid compound, and the soluble fluoro silicic acid compound, from a residual solids fraction comprising poorly soluble or insoluble impurities selected from a group consisting in U, Th, Fe, Ti, Al and Ca.

6. A process according to claim 5, which includes heating the liquid fraction to a temperature between 20°C. and 120°C. at substantially atmospheric pressure, to evaporate all the aqueous HF and the fluoro silicic acid compound, with fluoro zirconic acid compound remaining as a purified solid fraction, and condensing the volatiles for subsequent recovery of HF and Si species.

7. A process according to claim 5 or claim 6, which includes purifying the fluoro zirconic acid compound which remains as the solid fraction, by means of redissolving, recrystallization or ion exchange, and converting the purified fluoro zirconic acid compound to zirconia by means of steam pyrolysis.

8. A process according to any one of claims 5 to 7 inclusive, which includes subjecting the residual solids fraction to further treatment to recover at least one element therefrom.

9. A process for treating a zirconia-based material, which comprises

reacting, in a reaction step, non-desilicated or partially desilicated plasma dissociated zircon ('PDZ') with aqueous hydrogen fluoride ('HF'), to produce a soluble fluoro zirconic acid compound dissolved in the aqueous HF, as well as soluble fluoro silicic acid compound also dissolved in the aqueous HF;
separating a liquid fraction comprising residual aqueous HF, the soluble fluoro zirconic acid compound and the soluble fluoro silicic acid compound, from a residual solids fraction comprising poorly soluble or insoluble impurities selected from the group consisting in U, Th, Fe, Ti, Al and Ca;
heating the liquid fraction to evaporate the soluble fluoro silicic acid compound and aqueous HF so that the fluoro zirconic acid compound remains as a purified solid fraction.

10. A process according to claim 9, wherein the concentration of the HF in the aqueous HF is in the ranged of 5-70% HF by mass, with the reaction of the PDZ with the aqueous HF being effected at a temperature between 20°C. and 120°C., and the reaction period being between 10 minutes and 4 hours.

11. A process according try claim 9 or claim 10, wherein the quantity of HF, as aqueous HF, used is approximately stoichiometric, on a molar basis, with respect to the zirconia component plus the silica component of the PDZ.

12. A process according to any one of claims 9 to 11 inclusive, wherein the heating of the liquid fraction is effected at a temperature between 20°C. and 120°C. at substantially atmospheric pressure, the process including condensing the volatiles for subsequent recovery of HF and Si species.

13. A process according to any one of claims 9 to 12 inclusive, which includes further purifying the fluoro zirconic acid compound which remains as the purified solid fraction, by means of redissolving, recrystallization or ion exchange, and converting the purified fluoro zirconic acid compound to zirconia by means of steam pyrolysis.

## Patentansprüche

1. Verfahren zur Behandlung eines Materials auf Zirkoniumoxidbasis, umfassend das Umsetzen in einer Reaktionsstufe von Plasma-dissoziiertem Zircon ("PDZ") mit wäßrigem Fluorwasserstoff ("HF") zur Bildung einer löslichen Zirconiumfluorwasserstoffsäureverbindung, die in dem wäßrigen HF gelöst ist.

2. Verfahren nach Anspruch 1, wobei das PDZ nicht desilificiert oder teilweise desilificiert ist, so daß neben der löslichen Zirconiumfluorwasserstoffsäureverbindung eine lösliche Fluorkieselsäureverbindung, die ebenfalls in dem wäßrigen HF gelöst ist, gebildet wird.

3. Verfahren nach Anspruch 2, wobei die Konzentration des HF in dem wäßrigen HF im Bereich von 5 bis 70 Massen-% HF liegt, wobei die Reaktion bei einer Temperatur zwischen 20 und 120°C durchgeführt wird und die Reaktionszeit zwischen 10 Minuten und 4 Stunden liegt.

4. Verfahren nach Anspruch 2 oder 3, wobei die verwendete Menge an HF als wäßriges HF auf molarer Basis annähernd stöchiometrisch ist bezogen auf die Zirkoniumoxidkomponente plus der Siliciumdioxidkomponente des PDZ.

5. Verfahren nach einem der Ansprüche 2 bis einschließlich 4, umfassend das Abtrennen einer flüssigen Fraktion, umfassend restliches wäßriges HF, die lösliche Zirconiumfluorwasserstoffsäureverbindung und die lösliche Fluorkieselsäureverbindung, von einer restlichen Feststofffraktion, umfassend schwer lösliche oder unlösliche Verunreinigungen, ausgewählt aus einer Gruppe, bestehend aus U, Th, Fe, Ti, Al und Ca.

6. Verfahren nach Anspruch 5, umfassend das Erwärmen der flüssigen Fraktion auf eine Temperatur zwischen 20 und 120°C bei im wesentlichen Atmosphärendruck, um das gesamte wäßrige HF und die Fluorkieselsäureverbindung zu verdampfen, wobei die Zirconiumfluorwasserstoffsäureverbindung als gereinigte feste Fraktion zurückbleibt, und Kondensieren der flüchtigen Bestandteile zur anschließenden Rückgewinnung von HF- und Si-Verbindungen.

7. Verfahren nach Anspruch 5 oder 6, umfassend das Reinigen der Zirconiumfluorwasserstoffsäureverbindung, die als feste Fraktion zurückbleibt, durch erneutes Lösen, Umkristallisieren oder Ionenaustausch und Umwandeln der gereinigten Zirconiumfluorwasserstoffsäureverbindung in Zirkoniumoxid durch Dampfpyrolyse.

8. Verfahren nach einem der Ansprüche 5 bis einschließlich 7, umfassend eine weitere Behandlung der restlichen Feststofffraktion, um mindestens ein Element daraus zurückzugewinnen.

9. Verfahren zum Behandeln eines Materials auf Zirkoniumoxidbasis, umfassend

Umsetzen von nicht desilificiertem oder teilweise desilificiertem Plasma-dissoziiertem Zircon ("PDZ") mit wäßrigem Fluorwasserstoff ("HF") in einer Reaktionsstufe zur Bildung einer löslichen Zirconiumfluorwasserstoffsäureverbindung, die in dem wäßrigen HF gelöst ist, sowie einer löslichen Fluorkieselsäureverbindung, die ebenfalls in dem wäßrigen HF gelöst ist,
Abtrennen einer flüssigen Fraktion, umfassend restliches wäßriges HF, die lösliche Zirconiumfluorwasserstoffsäureverbindung und die lösliche Fluorkieselsäureverbindung, von einer restlichen Feststofffraktion, umfassend schwer lösliche oder unlösliche Verunreinigungen, ausgewählt aus der Gruppe bestehend, aus U, Th, Fe, Ti, Al und Ca,
Erwärmen der flüssigen Fraktion, um die lösliche Fluorkieselsäureverbindung und wäßriges HF zu verdampfen, so daß die Zirconiumfluorwasserstoffsäureverbindung als gereinigte feste Fraktion zurückbleibt.

10. Verfahren nach Anspruch 9, wobei die Konzentration an HF in dem wäßrigen HF im Bereich von 5-70 Massen-% HF liegt, wobei die Reaktion des PDZ mit dem wäßrigen HF bei einer Temperatur zwischen 20 und 120°C durchgeführt wird und die Reaktionszeit zwischen 10 Minuten und 4 Stunden liegt.

11. Verfahren nach Anspruch 9 oder 10, wobei die verwendete Menge an HF als wäßriges HF auf molarer Basis annähernd stöchiometrisch ist bezogen auf die Zirkoniumoxidkomponente plus der Siliciumdioxidkomponente des PDZ.

12. Verfahren nach einem der Ansprüche 9 bis einschließlich 11, wobei das Erwärmen der flüssigen Fraktion bei einer Temperatur zwischen 20 und 120°C bei in wesentlichen Atmosphärendruck durchgeführt wird und das Verfahren das Kondensieren der flüchtigen Bestandteile zur anschließenden Rückgewinnung von HF- und Si-Verbindungen umfaßt.

13. Verfahren nach einem der Ansprüche 9 bis einschließlich 12, umfassend ferner das Reinigen der Zirconiumfluorwasserstoffsäureverbindung, die als gereinigte feste Fraktion zurückbleibt durch erneutes Lösen, Umkristallisieren oder Ionenaustausch und Umwandeln der gereinigten Zirconiumfluorwasserstoffsäureverbindung in Zirkoniumoxid durch Dampfpyrolyse.

**Revendications**

1. Procédé pour le traitement d'une matière à base de zircone, qui comprend la réaction, dans une étape réactionnelle, de zircon dissocié par plasma ("PDZ") avec une solution aqueuse de fluorure d'hydrogène ("HF") pour produire un composé d'acide fluorozirconique soluble dissous dans la solution aqueuse de HF.

2. Procédé suivant la revendication 1, dans lequel le PDZ est non désilicaté ou partiellement désilicaté de telle sorte que, en plus du composé d'acide fluorozirconique soluble, un composé d'acide fluorosilicique soluble, dissous également dans la solution aqueuse de HF, soit produit.

3. Procédé suivant la revendication 2, dans lequel la concentration du HF dans la solution aqueuse de HF est comprise dans l'intervalle de 5 à 70 % de HF en masse, la réaction étant conduite à une température comprise dans l'intervalle de 20°C à 120°C et le temps de réaction étant compris dans l'intervalle de 10 minutes à 4 heures.

4. Procédé suivant la revendication 2 ou la revendication 3, dans lequel la quantité de HF, sous forme d'une solution aqueuse de HF, utilisée est approximativement stoechiométrique, sur base molaire, par rapport à la zircone plus la silice présentes comme constituants du PDZ.

5. Procédé suivant l'une quelconque des revendications 2 à 4 inclus, qui comprend la séparation d'une fraction liquide comprenant la solution aqueuse de HF résiduelle, le composé d'acide fluorozirconique soluble et le composé d'acide fluorosilicique soluble, d'une fraction de matières solides résiduelles comprenant des impuretés médiocrement solubles ou insolubles choisies dans le groupe consistant en U, Th, Fe, Ti, Al et Ca.

6. Procédé suivant la revendication 5, qui comprend le chauffage de la fraction liquide à une température comprise dans l'intervalle de 20°C à 120°C sous une pression pratiquement égale à la pression atmosphérique, pour provoquer l'évaporation de la totalité de la solution aqueuse de HF et du composé d'acide fluorosilicique, le composé d'acide fluorozirconique restant sous forme d'une fraction solide purifiée, et la condensation des matières volatiles pour la récupération ultérieure des entités de HF et Si.

7. Procédé suivant la revendication 5 ou la revendication 6, qui comprend la purification du composé d'acide fluorozirconique qui reste sous forme de fraction solide, par redissolution, recristallisation ou échange d'ions, et la transformation du composé d'acide fluorozirconique purifié en zircone par pyrolyse à la vapeur d'eau.

8. Procédé suivant l'une quelconque des revendications 5 à 7 inclus, qui comprend l'étape consistant à soumettre la fraction de matières solides résiduelles à un traitement supplémentaire pour en récupérer au moins un élément.

9. Procédé pour le traitement d'une matière à base de zircone, qui comprend

la réaction, dans une étape réactionnelle, d'un zircon dissocié par plasma, ("PDZ"), non désilicaté ou partiellement désilicaté, avec une solution aqueuse de fluorure d'hydrogène ("HF") pour produire un composé d'acide fluorozirconique soluble dissous dans la solution aqueuse de HF, ainsi qu'un composé d'acide fluorosilicique soluble également dissous dans la solution aqueuse de HF ;
la séparation d'une fraction liquide comprenant la solution aqueuse de HF résiduelle, le composé d'acide fluorozirconique soluble et le composé d'acide fluorosilicique soluble, d'une fraction de matières solides résiduelles comprenant des impuretés médiocrement solubles ou insolubles choisies dans le groupe consistant en U, Th, Fe, Ti, Al et Ca ;
le chauffage de la fraction liquide pour évaporer le composé d'acide fluorosilicique soluble et la solution aqueuse de HF de telle sorte que le composé d'acide fluorozirconique reste sous forme d'une fraction solide purifiée.

10. Procédé suivant la revendication 9, dans lequel la concentration du HF dans la solution aqueuse de HF est comprise dans l'intervalle de 5 à 70 % de HF en masse, la réaction du PDZ avec la solution aqueuse de HF étant conduite à une température comprise dans l'intervalle de 20°C à 120°C, et le temps de réaction étant compris dans l'intervalle de 10 minutes à 4 heures.

11. Procédé suivant la revendication 9 ou la revendication 10, dans lequel la quantité de HF, sous forme d'une solution aqueuse de HF, utilisée est approximativement stoechiométrique, sur base molaire, par rapport à la zircone plus la silice présentes comme constituants du PDZ.

12. Procédé suivant l'une quelconque des revendications 9 à 11 inclus, dans lequel le chauffage de la fraction liquide est effectué à une température comprise dans l'intervalle de 20°C à 120°C sous une pression pratiquement égale à la pression atmosphérique, le procédé comprenant la condensation des matières volatiles pour une récupération ultérieure des entités de HF et Si.

13. Procédé suivant l'une quelconque des revendications 9 à 12 inclus, qui comprend en outre la purification du composé d'acide fluorozirconique qui reste sous forme de fraction solide purifiée, par redissolution, recristallisation et échange d'ions, et la transformation du composé d'acide fluorozirconique purifié en zircone par pyrolyse à la vapeur d'eau.

FIG 1

FIG 3

FIG 2

FIG 4

EP 0 796 226 B1

FIG 5